Europäisches Patentamt

European Patent Office

Office européen des brevets

(11) Numéro de publication: **0 214 071**
**A1**

## (12) DEMANDE DE BREVET EUROPEEN

(21) Numéro de dépôt: **86420211.4**

(22) Date de dépôt: **13.08.86**

(51) Int. Cl.⁴: **A 01 M 7/00**

(30) Priorité: **14.08.85 FR 8512554**

(43) Date de publication de la demande:
**11.03.87 Bulletin 87/11**

(84) Etats contractants désignés: **BE DE FR GB NL**

(71) Demandeur: **BERTHOUD S.A., Société anonyme dite**
**Boîte Postale 36**
**F-69823 Belleville sur Saône Cédex (FR)**

(72) Inventeur: **Laibe, Serge**
**Le Clachet Mogneneins**
**F-01140 Thoissey (FR)**

(74) Mandataire: **Karmin, Roger et al**
**Cabinet MONNIER 150, cours Lafayette**
**F-69003 Lyon (FR)**

(54) **Dispositif de suspension d'un élément allongé associé à un engin porteur, notamment d'une rampe de pulvérisation de produits phytosanitaires.**

(57) Le dispositif comprend deux bielles croisées (3, 4) dont l'une des extrémités de chacune d'elle (3b, 4b) est articulée à une biellette (5) respectivement (6) et une traverse (7) reliant entre elles les bielles (3, 4), ces extrémités étant articulées à ces dernières entre leur point de croisement et leur liaison aux biellettes (5, 6).

*Fig 1*

EP 0 214 071 A1

**Description**

La présente invention a trait à un dispositif de suspension d'une rampe de pulvérisation de produits phytosanitaires permettant une correction de position en terrains variés.

Pour le traitement des cultures, on utilise de plus en plus fréquemment des rampes de très grande longueur auxquelles sont associées des buses de pulvérisation du liquide phytosanitaire. On conçoit aisément que les terrains étant irréguliers, l'engin porteur de la rampe est soumis à des chaos qu'il transmet à cette dernière, ce qui est néfaste à une bonne projection des produits. On a déjà proposé un certain nombre de dispositifs de suspension comportant des biellettes articulées d'une part à la rampe et d'autre part au châssis de l'engin porteur. Le dispositif de suspension doit être de plus en plus parfait du fait qu'en plus des longueurs importantes des rampes les vitesses de travail sont de plus en plus élevées. Le problème consistant à suspendre de manière satisfaisante une rampe d'épandage de liquide phytosanitaire de grande longueur par rapport à un engin porteur est résolu suivant l'invention par un système comportant :
- deux bielles croisées dont l'une des extrémités de chacune d'elle est articulée à une courte biellette.
- et une traverse reliant entre elles les bielles, les extrémités de cette traverse étant articulée à ces dernières entre leur point de croisement et leur liaison aux biellettes.

Suivant un mode d'exécution préféré de la dispositif qui précède, les extrémités des biellettes et des bielles croisées opposées à celles qui sont articulées entre elles sont respectivement associées à la rampe de pulvérisation et à l'engin porteur.

Suivant une variante, les extrémités des biellettes et des bielles croisées opposées à celles qui sont articulées entre elles sont respectivement associées à l'engin porteur et à la rampe de pulvérisation.

Le dessin annexé, donné à titre d'exemple, permettra de mieux comprendre l'invention, les caractéristiques qu'elle présente et les avantages qu'elle est susceptible de procurer :

    Fig. 1 est une vue schématique d'un dispositif de suspension établi conformément à l'invention.

    Fig. 2 illustre une variante dans laquelle le dispositif de suspension est doublé.

    Fig. 3 est une autre variante dans laquelle la suspension de la rampe s'effectue au moyen d'un dispositif suivant l'invention utilisé à l'état renversé.

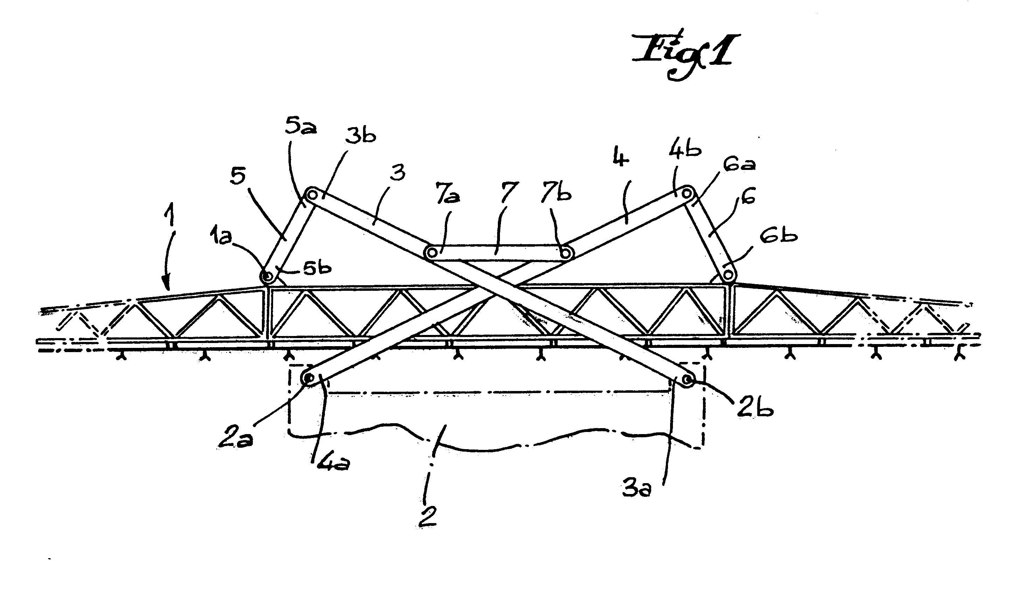

On a illustré en fig. 1 un dispositif suivant l'invention destiné à suspendre une rampe de pulvérisation 1 par rapport à un cadre 2 fixé à un engin porteur non représenté.

Le dispositif de suspension suivant l'invention comprend deux bielles 3, 4 dont l'une des extrémités 3a, 4a est montée à pivotement par rapport à deux axes horizontaux 2a, 2b du cadre 2. Les axes en question se trouvent orientés de manière orthogonale par rapport à la rampe 1. Les deux bielles 3 et 4 sont croisées de telle sorte que leur ensemble affecte la forme d'un X. Les extrémités 3b, 4b des bielles 3 et 4 opposées à celles 3a, 4a associées aux axes 2a, 2b sont associées à l'une des extrémités 5a, 6a de deux biellettes courtes 5, 6 dont l'autre extrémité 5b, 6b est montée à rotation par rapport à des axes 1a, 1b solidaire de la partie centrale de la rampe 1.

On note encore la présence d'une traverse 7 dont les extrémités 7a, 7b sont articulées aux bielles 3 et 4 entre leur point de croisement et leurs extrémités 3b, 4b liées aux biellettes 5 et 6.

Un tel dispositif de suspension permet d'éviter tout mouvement intempestif de la rampe d'épandage quel que soit l'état de surface du terrain sur lequel l'engin porteur se déplace. On supprime le balancement désordonné de la rampe et tout risque que ses extrémités viennent en contact avec le sol.

Les axes d'articulation 1a et 1b des biellettes 5 et 6 par rapport à la rampe peuvent être éloignés ou rapprochés pour permettre d'obtenir des positions de travail à plat ou en dévers. De plus, cette variation de distance des axes d'articulation 1a, 1b des biellettes 5 et 6 permet de durcir plus ou moins l'amortissement du dispositif de suspension.

On pourrait aussi ne déplacer qu'un des axes 1a ou 1b de manière que la rampe d'épandage 1 reste parallèle à l'essieu de l'engin porteur, même lorsque celui-ci se déplace en dévers, c'est-à-dire perpendiculairement à la ligne de plus grande pente d'un coteau.

On pourrait remplacer les bielles 3 et 4 par des vérins hydrauliques qui permettraient aussi de corriger facilement les positions de dévers.

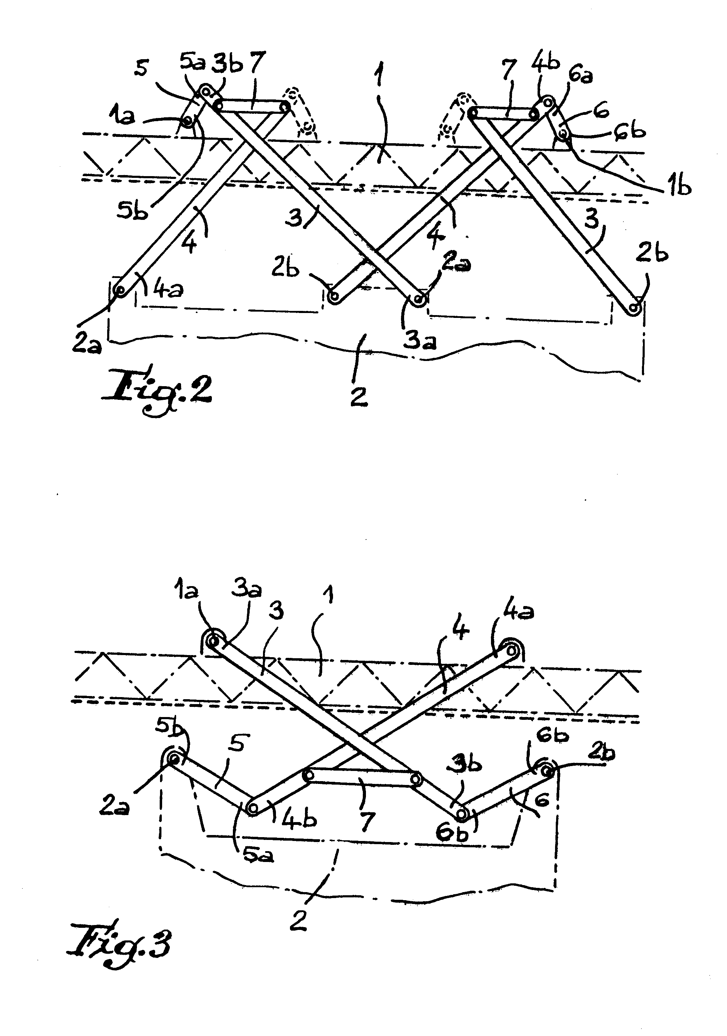

En associant aux vérins ainsi prévus des accumulateurs hydro-pneumatiques en soi connus, on pourrait assouplir la suspension et ainsi lui associer un asservissement oléopneumatique. Comme illustré en fig. 2, on pourrait utiliser deux paires de bielles croisées 3, 4, chacune comportant le coulisseau 7. Mais dans ce cas, on n'utiliserait pas deux paires de biellettes 5, 6 mais bien une seule, chacune d'elles étant articulée à l'extrémité des deux bielles centrales 3 et 4. Suivant une autre variante, les bielles 5 et 6 pourraient être articulées aussi aux extrémités des bielles extérieures 3 et 4, comme illustré en pointillés. Ainsi, ce seraient les bielles non parallèles des deux paires qui seraient reliées à la rampe 1 par l'intermédiaire des biellettes 5, 6.

Enfin, il va de soi qu'on pourrait utiliser le dispositif de suspension illustré en fig. 1 de manière inversée, c'est-à-dire que les extrémités 3a, 4a des bielles 3 et 4 seraient articulées à la rampe de pulvérisation tandis que les extrémités 5b, 6b des biellettes 5 et 6 opposées à celles 5a, 6a qui sont articulées auxdites bielles 3 et 4, se trouveraient montées à articulation par rapport au cadre 2 (fig. 3).

## Revendications

1. Dispositif de suspension d'un élément allongé associé à un engin porteur, notamment d'une rampe de pulvérisation de produits phytosanitaires. caractérisé en ce qu'il comprend au moins un système comportant :
- deux bielles croisées (3, 4) dont l'une des extrémités (3b. 4b) de chacune d'elles est articulée à une biellette courte (5, 6).
- une traverse (7) reliant entre elles les bielles (3, 4), ses extrémités étant articulées à ces dernières entre leur point de croisement et leur liaison aux biellettes (5. 6).

2. Dispositif de suspension suivant la revendication 1, caractérisé en ce que les extrémités (5b, 6b) (3a, 4a) des biellettes (5. 6) et des bielles croisées (3, 4) opposées à celles (3b, 4b) (5a, 6a) qui sont articulées entre elles sont respectivement associées à la rampe de pulvérisation (1) et à un cadre (2) de l'engin porteur.

3. Dispositif de suspension suivant la revendication 1, caractérisé en ce que les extrémités (5b, 6b) (3a, 4a) des biellettes (5, 6) et des bielles croisées (3, 4) opposées à celles (3b, 4b) 5a, 6a) qui sont articulées entre elles sont respectivement associées à un cadre (2) de l'engin porteur et à la rampe de pulvérisation (1).

4. Dispositif de suspension suivant la revendication 1, caractérisé en ce qu'on peut faire varier la distance des points d'attache (1a, 1b) des extrémités (5b, 6b) des biellettes (5. 6) opposées à celles (5a, 6a) qui sont articulées aux bielles croisées (3, 4).

5. Dispositif de suspension suivant la revendication 1, caractérisé en ce que les bielles croisées (3, 4) sont remplacées par des vérins à fluide sous pression.

6. Dispositif de suspension suivant la revendication 5, caractérisé en ce qu'un accumulateur oléopneumatique est branché sur chaque vérin.

Dispositif de suspension d'un élément allongé associé à un engin porteur, notamment d'une rampe de pulvérisation de produits phytosanitaires caractérisé en ce qu'il comprend :
- deux paires de bielles (3, 4) croisées dont l'une des extrémités est articulée à un cadre (2) de l'engin porteur, tandis que les extrémités des deux bielles non parallèles (3, 4) sont articulées à l'une des extrémités (5a, 6a) de biellettes (5, 6) dont l'autre extrémité (5b, 6b) est montée à pivotement par rapport à deux axes (1a, 1b) de la rampe de pulvérisation (1), une traverse (7) reliant entre elles les bielles (3, 4) de chaque paire, ses extrémités étant articulées à ces dernières entre leur point de croisement et leurs extrémités opposées à celles qui sont associées au cadre (2).

- Leerseite -

Fig. 1

Fig.2

Fig.3

## DOCUMENTS CONSIDERES COMME PERTINENTS

| Catégorie | Citation du document avec indication. en cas de besoin. des parties pertinentes | Revendication concernée | CLASSEMENT DE LA DEMANDE (Int Cl 4) |
|---|---|---|---|
| A | FR-A-2 093 609 (F. SCHUMACHER) | | A 01 M 7/00 |
| | --- | | |
| A | BE-A- 825 066 (P. DEMARET) | | |
| | --- | | |
| A | FR-A-2 289 116 (P. DEMARET) | | |
| | --- | | |
| A | EP-A-0 077 110 (WHITE McKEE INC.) | | |
| | ----- | | |

| DOMAINES TECHNIQUES RECHERCHES (Int Cl.4) |
|---|
| A 01 M<br>B 05 B |

Le présent rapport de recherche a été etabli pour toutes les revendications

| Lieu de la recherche | Date d'achèvement de la recherche | Examinateur |
|---|---|---|
| LA HAYE | 13-11-1986 | NEHRDICH H.J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur. mais publié à la date de dépôt ou après cette date
D : cité dans la demande
L : cité pour d'autres raisons

& : membre de la même famille, document correspondant

OEB Form 1503 03 82